# EUROPÄISCHE PATENTSCHRIFT

(11) **EP 2 430 582 B1**
(45) Veröffentlichungstag und Bekanntmachung des Hinweises auf die Patenterteilung: **17.08.2016**
(21) Anmeldenummer: 10712917.3
(22) Anmeldetag: 19.03.2010
(51) Int. Cl.: G06Q 20/34, G07F 7/10, G07F 7/12

(54) **ELEKTRONISCHER SCHLÜSSEL ZUR AUTHENTIFIZIERUNG**
ELECTRONIC KEY FOR AUTHENTICATION
CLÉ ÉLECTRONIQUE SERVANT À L'AUTHENTIFICATION

(30) Priorität: 13.05.2009 DE 102009021011
(43) Veröffentlichungstag der Anmeldung: 21.03.2012
(73) Patentinhaber: Siemens Aktiengesellschaft, 80333 München (DE)
(72) Erfinder: FALK, Rainer, 85435 Erding (DE); FRIES, Steffen, 85598 Baldham (DE)
(86) Internationale Anmeldenummer: PCT/EP2010/053608
(87) Internationale Veröffentlichungsnummer: WO 2010/130489

(56) Entgegenhaltungen:
- WO-A1-2004/035321
- US-A- 4 034 211

## Beschreibung

Die Erfindung betrifft einen elektronischen Schlüssel zur Authentifizierung eines Benutzers sowie ein Verfahren und ein System zur Authentifizierung eines Benutzers mit einem elektronischen Schlüssel und einem Lesegerät.

Authentifizierungsverfahren für sicherheitskritische Dienste müssen oftmals im Laufe der Zeit durch neuere, bessere Verfahren ersetzt werden. Ein Beispiel dafür ist die EC-Karte, bei der in ihrer ursprünglichen Version gespeicherte Informationen eines vorhandenen Magnetstreifens und eine PIN (Personal Identification Number) benutzt werden, um den Zugriff zu einem zugeordneten Konto zu erlauben. In letzter Zeit ist es jedoch immer öfter zu so genannten Skimming-Angriffen gekommen, bei denen durch Vorschaltgeräte an den Geldautomaten die Karte kopiert wird und die PIN durch geeignete technische Maßnahmen ausgespäht wird. Der Inhalt des Magnetstreifens wird dann auf eine neue Karte kopiert, so dass ein nicht autorisierter Zugriff auf das Konto möglich ist. Die Daten des Magnetstreifens sind zwar üblicherweise verschlüsselt oder mit einer kryptographischen Prüfsumme versehen, so dass die Informationen ohne Kenntnis des Zentralschlüssels nicht lesbar sind. Allerdings benötigt ein Angreifer diesen Zentralschlüssel nicht, wenn er den kompletten Magnetstreifen kopiert und im Besitz der PIN ist.

Daher unterstützen neuere EC-Karten mittlerweile eine integrierte Smartcard, die nicht so einfach wie ein Magnetstreifen kopiert werden kann. Diese bietet eine deutlich höhere Sicherheit als das Magnetstreifen-basierte Verfahren. Zur Sicherstellung der Abwärtskompatibilität zu bestehenden Systemen wird das Magnetstreifen-basierte Verfahren jedoch weiterhin unterstützt, damit nicht alle Geldautomaten zugleich ausgetauscht werden müssen.

Der Geldautomat beziehungsweise Kartenleser prüft das Vorhandensein eines kontaktbehafteten Smartcard-Chips mittels einer galvanischen Verbindung zu den Chipkartenkontakten auf der Karte. Ein vorhandener Smartcard-Chip ist beispielsweise erkennbar, indem er auf Anlegen der Versorgungsspannung eine ATR-Nachricht (Answer to Reset) überträgt. Wird ein Smartcard-Chip erkannt, wird das Smartcard-basierte Authentifizierungsverfahren anstatt des Magnetkarten-basierten Authentifizierungsverfahrens verwendet. Wird jedoch kein Smartcard-Chip erkannt, wird das vorhandene Magnetstreifen-basierte Authentifizierungsverfahren verwendet.

Problematisch hierbei ist, dass der Magnetstreifen von Karten, die sowohl das Magnetstreifen-basierte als auch das Smartcard-basierte Authentifizierungsverfahren unterstützen, immer noch einfach kopiert werden kann. Eine kopierte Karte wird dann auch von Geldautomaten akzeptiert, die eigentlich sowohl das Magnetstreifen-basierte Authentifizierungsverfahren als auch das Smartcard-basierte Authentifizierungsverfahren unterstützen würden. Derartige Angriffe werden auch als "Bidding-Down" Angriffe bezeichnet.

Bidding-Down-Angriffe sind von Sicherheitsprotokollen zur Authentifizierung und Schlüsselvereinbarung bekannt. Innerhalb eines Authentifizierungsprotokolls werden mehrere Varianten unterstützt, die unterschiedlich stark sind. Anfangs tauschen die beiden Kommunikationspartner Informationen über die jeweils unterstützten Varianten aus. Es wird die stärkste von beiden unterstützten Varianten ausgewählt und im Protokollablauf verwendet. Da der initiale Informationsaustausch jedoch noch nicht kryptographisch gegen Manipulation geschützt ist, kann ein Angreifer die ausgetauschte Information so manipulieren, dass ein schwaches Verfahren gewählt wird, obwohl beide Kommunikationspartner auch starke Verfahren unterstützen würden. Dazu spiegelt er vor, dass ein Kommunikationspartner nur diese schwache Variante unterstützt. Als Gegenmaßnahme überprüfen manche Protokolle zu einem späteren Zeitpunkt, wenn die Authentifizierung und Schlüsselvereinbarung erfolgt ist, nachträglich die Integrität der initial ausgetauschten Informationen. Dazu werden Prüfsummen berechnet, übertragen und überprüft.

Folglich liegt der vorliegenden Erfindung die Aufgabe zugrunde, einen elektronischen Schlüssel anzugeben, welcher mehrere Authentifizierungsverfahren unterstützt und mit dem die oben bezeichneten Bidding-Down-Angriffe verhindert werden.

Erfindungsgemäß wird diese Aufgabe durch einen elektronischen Schlüssel, ein Verfahren und ein System mit den Merkmalen der Ansprüche 1, 5 und 7 gelöst. Vorteilhafte Weiterbildungen der Erfindung sind in den abhängigen Ansprüchen angegeben.

Der erfindungsgemäße elektronische Schlüssel (Security Token) zur Authentifizierung eines Benutzers unterstützt mindestens zwei Authentifizierungsverfahren, wobei für jeweils ein Authentifizierungsverfahren eine separate Sicherheitsinformation gespeichert ist. Die jeweilige Sicherheitsinformation ist über mindestens eine Schnittstelle lesbar. Die Sicherheitsinformation für ein erstes Authentifizierungsverfahren weist eine Information über die Unterstützung zumindest eines weiteren Authentifizierungsverfahrens auf.

Ein elektronischer Schlüssel umfasst ohne Beschränkung der Allgemeinheit dieses Begriffs Security Token, welche zur Authentifizierung eines Nutzers zumindest eine Sicherheitsinformation speichern. Dabei kann es sich um eine Identifizierungsinformation oder um einen kryptographischen Schlüssel zur Authentifizierung eines Nutzers handeln. Der elektronische Schlüssel ist in unterschiedlichen Formfaktoren realisierbar, beispielsweise als Chipkarte, als USB-Stick oder als Speicherkarte. Weiterhin verfügt der elektronische Schlüssel über unterschiedliche Schnittstellen, welche beispielsweise als Chipkarten-Schnittstelle, USB-Schnittstelle, Speicherkarten-Schnittstelle (SD-Card, MMC-Card) oder als eine drahtlose Schnittstelle ausgebildet sind. Die Schnittstelle kann auch in Form eines Magnetstreifens oder als Machine Readable Zone verfügbar sein.

Die beanspruchte Erfindung betrifft folglich einen elektronischen Schlüssel (Security Token), welcher mindestens zwei Authentifizierungsverfahren unterschiedlicher Art unterstützt. Eine dem jeweiligen Authentifizierungsverfahren jeweils zugeordnete Sicherheitsinformation ist separat auf dem elektronischen Schlüssel gespeichert und über unterschiedliche Schnittstellen des elektronischen Schlüssels lesbar. Als Teil der Sicherheitsinformation des ersten Authentifizierungsverfahrens wird eine Information über die Unterstützung des zweiten Authentifizierungsverfahrens umfasst. So ist beispielsweise auf dem Magnetstreifen einer EC-Karte das Vorhandensein eines Smartcard-Chips auf der Karte codiert. Diese Information ist beispielsweise mit einem Systemschlüssel der ausgebenden Bank verschlüsselt, so dass die Information über das Vorhandensein des Smartcard-Chips ebenfalls gesichert ist.

In vorteilhafter Weise wird durch ein Kartenlesegerät somit erkannt, welche Authentifizierungsverfahren der elektronische Schlüssel unterstützt. Wenn anhand dieser Information das Lesegerät erkennt, dass der elektronische Schlüssel ein stärkeres zweites Authentifizierungsverfahren unterstützt, dieses Authentifizierungsverfahren vom Kartenlesegerät jedoch nicht erkannt wurde, so wird der elektronische Schlüssel beispielsweise zurückgewiesen.

In einer vorteilhaften Ausgestaltung der vorliegenden Erfindung ist die Information über die Unterstützung eines weiteren Authentifizierungsverfahrens auf einem Server hinterlegt. Von diesem Server ist die Information vom Kartenlesegerät abfragbar.

Das erfindungsgemäße Verfahren zur Authentifizierung eines Benutzers mit einem Lesegerät und einem elektronischen Schlüssel umfasst folgende Schritte, welche durch das Lesegerät ausgeführt werden: Die von dem elektronischen Schlüssel unterstützten ersten Authentifizierungsverfahren werden ermittelt. Ein Authentifizierungsverfahren wird gemäß einer vorgebbaren Richtlinie (Policy) aus den unterstützten ersten Authentifizierungsverfahren ausgewählt. Eine Sicherheitsinformation für das ausgewählte Authentifizierungsverfahren wird gelesen. Anhand der gelesenen Sicherheitsinformation werden unterstützte zweite Authentifizierungsverfahren ermittelt. Das ausgewählte Authentifizierungsverfahren wird anhand der unterstützten zweiten Authentifizierungsverfahren gemäß einer vorgebbaren Prüfrichtlinie (Prüf-Policy) überprüft, so dass bei einem Prüfrichtlinien-konformen Überprüfungsergebnis die Authentifizierung mit dem ausgewählten Authentifizierungsverfahren fortgesetzt wird und bei einem nicht Prüfrichtlinien-konformen Überprüfungsergebnis die Authentifizierung mit dem ausgewählten Authentifizierungsverfahren unterbunden wird.

Das erfindungsgemäße System zur Authentifizierung eines Benutzers weist einen elektronischen Schlüssel mit Mitteln zur Durchführung von mindestens zwei Authentifizierungsverfahren auf, bei dem für jeweils ein Authentifizierungsverfahren eine separate Sicherheitsinformation gespeichert ist, welche jeweils über mindestens eine Schnittstelle lesbar ist und bei dem die Sicherheitsinformation für ein erstes Authentifizierungsverfahren eine Information über die Unterstützung zumindest eines weiteren Authentifizierungsverfahrens aufweist. Weiterhin weist das System ein Lesegerät mit Mitteln zum Ermitteln von weiteren unterstützten Authentifizierungsverfahren anhand der ausgelesenen Sicherheitsinformation und Mitteln zum Überprüfen eines ausgewählten Authentifizierungsverfahrens anhand der weiteren unterstützten Authentifizierungsverfahren gemäß einer vorgebbaren Prüfrichtlinie auf, so dass bei einem Prüfrichtlinien-konformen Überprüfungsergebnis die Authentifizierung mit dem ausgewählten Authentifizierungsverfahren fortgesetzt wird und bei einem nicht Prüfrichtlinien-konformen Überprüfungsergebnis die Authentifizierung mit dem ausgewählten Authentifizierungsverfahren abgebrochen wird.

Die vorliegende Erfindung wird nachfolgend an Ausführungsbeispielen anhand der Zeichnungen näher erläutert. Es zeigt
- Figur 1: eine schematische Darstellung eines Systems zur Authentifizierung mit einem elektronischen Schlüssel (ST) und drei Kartenlesegeräten (STR1, STR2, STR3);
- Figur 2: eine schematische Darstellung von auf einem Magnetstreifen gespeicherten Informationen nach dem Stand der Technik und gemäß der vorliegenden Erfindung;
- Figur 3: ein Ablaufdiagramm des erfindungsgemäßen Verfahrens.

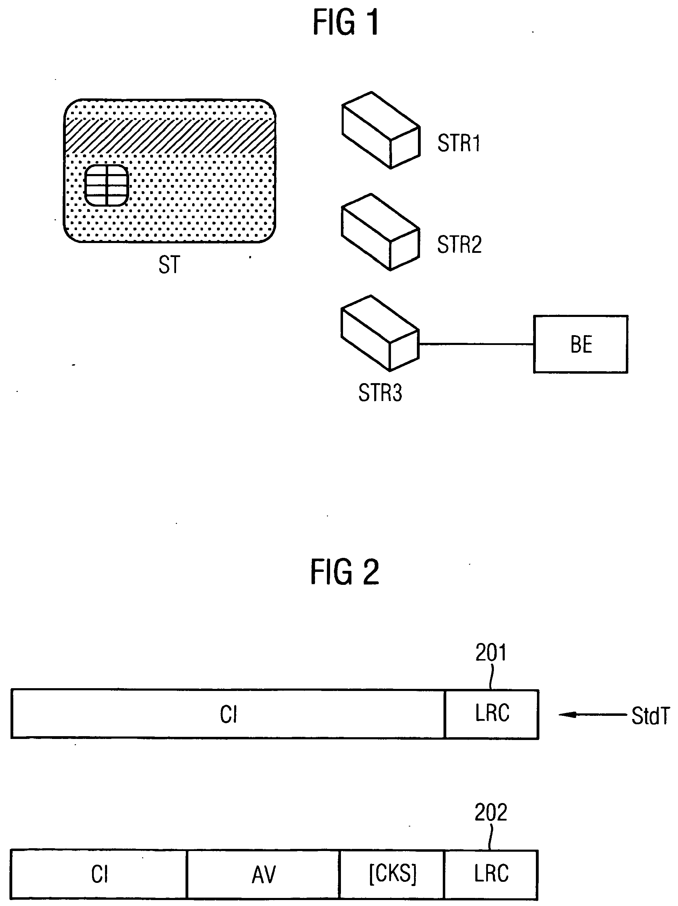

Figur 1 zeigt einen elektronischen Schlüssel ST, welcher einen Magnetstreifen-basiertes und ein Chipkarten-basiertes Authentifizierungsverfahren unterstützt. Mit dem Smartcard-Chip wird über die Kontaktflächen auf der Kartenoberseite kommuniziert. Weiterhin sind in der Figur 1 drei Kartenlesegeräte STR1, STR2 und STR3 abgebildet. Das erste Kartenlesegerät STR1 unterstützt nur das Magnetstreifen-basierte Authentifizierungsverfahren, wohingegen das zweite Kartenlesegerät STR2 sowohl das Smartcard-basierte als auch das Magnetstreifen-basierte Authentifizierungsverfahren unterstützt. Das dritte Kartenlesegerät STR3 ist über ein nicht dargestelltes Kommunikationsnetzwerk mit einem Back-End-System BE verbunden. Über diese Verbindung kann das Kartenlesegerät STR3 Informationen anhand der ausgelesenen Identifizierungsdaten von dem elektronischen Schlüssel ST durch das Back-End-System BE erhalten. Auch das Kartenlesegerät STR3 unterstützt sowohl das Magnetstreifen-basierte als auch das Smartcard-basierte Authentifizierungsverfahren.

Durch die Erfindung wird die Sicherheit des höherwertigen Smartcard-basierten Authentifizierungsverfahrens durchgängig beibehalten, da ein Bidding-Down-Angriff auf das schwächere Magnetstreifen-basierte Authentifizierungsverfahren nicht möglich ist. Damit lässt sich ein Kartenlesegerät, welches auch eine starke Authentifizierungsvariante unterstützt (wie beispielsweise STR2 und STR3), nicht mehr überlisten, die schwächere Authentifizierungsvariante eines elektronischen Schlüssels zu benutzen, welcher auch die starke Variante unterstützt.

Selbst wenn sowohl der elektronische Schlüssel ST als auch das Lesegerät STR2 beziehungsweise STR3 eine Authentifizierung unter Verwendung des Magnetstreifens unterstützen, wird durch die Erfindung gewährleistet, dass ein Bidding-Down-Angreifer dieses schwächere Authentifizierungsverfahren nicht nutzen kann, falls sowohl der elektronische Schlüssel ST als auch das Kartenlesegerät STR2 beziehungsweise STR3 das höherwertige Authentifizierungsverfahren unterstützen. Das schwache Authentifizierungsverfahren wird nur noch verwendet, wenn tatsächlich der elektronische Schlüssel ST oder das Kartenlesegerät STR1 nur die schwächere Authentifizierungsvariante unterstützen.

Folglich wird die Sicherheit eines elektronischen Schlüssels (Security Token), welcher mehrere Varianten von Authentifizierungsverfahren unterstützt und die Sicherheit eines diesen elektronischen Schlüssel verwendenden Authentifizierungsverfahrens erhöht. Es genügt nicht, eine dieser Varianten zu kompromittieren, sondern es müssen mehrere beziehungsweise im Allgemeinen alle unterstützten Varianten auf einem nachgebildeten (geklonten) elektronischen Schlüssel nachgebildet werden. Dies erhöht den Aufwand für und somit auch die Sicherheit vor einem erfolgreichen Angriff wesentlich.

Als Anwendung kommen alle Verfahren in Betracht, bei denen eine Migration von einer schwachen Authentifizierungstechnologie auf eine weitere stärkere Authentifizierungstechnologie stattfindet.

Figur 2 zeigt in einer schematischen Darstellung eine auf einem Magnetstreifen gespeicherte Information. Im Stand der Technik 201 wird eine Information über die Karte CI (Card Information) gespeichert, wie beispielsweise Verwendungszweck, Herausgeber, Kontonummer, Name des Karteninhabers. Zum Schutz vor Lesefehlern ist eine Prüfsumme LRC (Longitudinal Redundancy Check) vorgesehen.

Gemäß der vorliegenden Erfindung werden zusätzliche Informationen bereitgestellt 202. So wird eine Information über weitere unterstützte Authentifizierungsverfahren AV vorgesehen. Diese Information über weitere unterstützte Authentifizierungsverfahren wird optional durch eine separate kryptographische Prüfsumme CKS geschützt, welche beispielsweise als Message Authentication Code ausgebildet ist. Die kryptographische Prüfsumme wird beispielsweise über die Felder CI und AV berechnet.

Nach einer Weiterbildung der vorliegenden Erfindung können Berechtigungen beziehungsweise Dienste an die Stärke der ausgewählten Authentifizierung gebunden werden. Dies ermöglicht beispielsweise, dass neue Dienste an die stärkeren Authentifizierungsverfahren gebunden werden, um hier einen Missbrauch mit älteren Karten zu vermeiden.

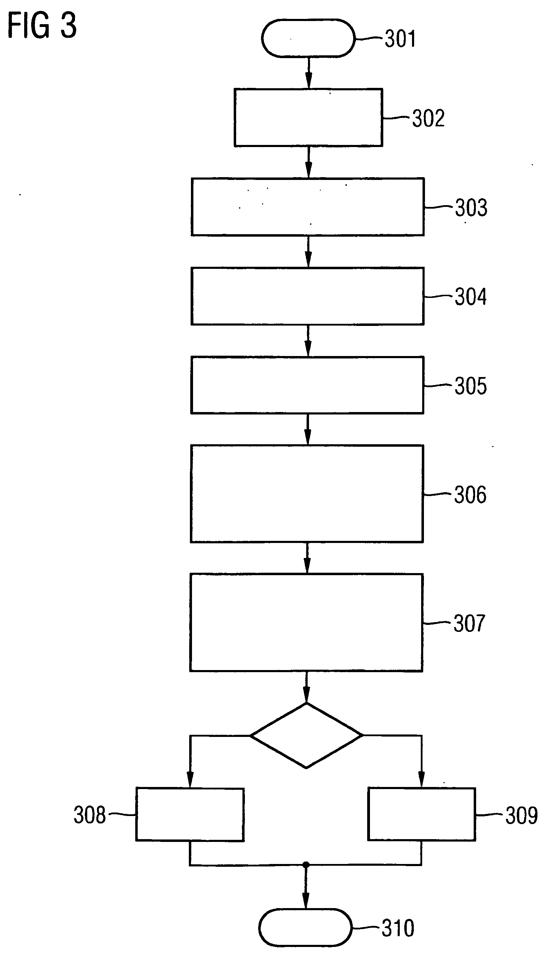

Figur 3 zeigt ein Ablaufdiagramm eines Ausführungsbeispiels des erfindungsgemäßen Verfahrens zur Authentifizierung eines Benutzers mit einem Lesegerät und einem elektronischen Schlüssel. Nachdem der elektronische Schlüssel, hier eine EC-Karte, in das Kartenlesegerät, hier einen Geldautomaten, eingebracht wurde 301, wird die EC-Karte zunächst durch den Geldautomaten als solche erkannt 302. Anschließend ermittelt der Geldautomat von der eingeführten EC-Karte die tatsächlich unterstützten Authentifizierungsvarianten 303.

In diesem Ausführungsbeispiel wird insbesondere das Vorhandensein eines Smartcard-Chips geprüft. Dies kann unterschiedlich komplex ausgeführt werden, beispielsweise durch Erkennen einer Kontaktfläche für einen Chip an der dafür vorgesehenen Position. Dies wird beispielsweise dadurch festgestellt, dass eine galvanische Verbindung vorhanden ist und folglich ein Strom fließen kann. Eine weitere Möglichkeit ist das Erkennen des Vorhandenseins einer Smartcard-Chip-Kommunikation, beispielsweise in Form einer ATR-Meldung (Answer to Reset). Des Weiteren besteht eine Möglichkeit, eine Identifizierungsinformation vom Smartcard-Chip, beispielsweise eine Seriennummer aus der ATR-Meldung, zu lesen und diese mit einer Prüfinformation, welche auf dem Magnetstreifen gespeichert ist, zu vergleichen. Eine solche Prüfsumme wird beispielsweise auf dem Magnetstreifen hinterlegt und ausgewertet oder über eine kombinierte Information, die teilweise auf dem Magnetstreifen und teilweise auf dem Chip gespeichert ist, berechnet und ausgewertet.

Im nächsten Schritt 304 wird eine Authentifizierungsvariante gemäß einer definierten Richtlinie (Policy) gewählt. In der Regel bedeutet dies, dass bei mehreren Authentifizierungsvarianten die kryptographisch sicherste beziehungsweise stärkste ausgewählt wird. Anschließend wird die zugeordnete Sicherheitsinformation über die zugeordnete Schnittstelle gelesen 305. Anhand der Sicherheitsinformation werden schließlich die von dem elektronischen Schlüssel unterstützten Authentifizierungsvarianten ermittelt 306.

Letztlich wird in Schritt 307 das in Schritt 304 ausgewählte Authentifizierungsverfahren und die in Schritt 306 aus der Sicherheitsinformation ermittelten unterstützten Authentifizierungsverfahren anhand einer Prüfrichtlinie geprüft. Sollte das Überprüfungsergebnis nicht Prüfrichtlinien-konform sein 308, wird das Verfahren zur Authentifizierung eines Benutzers abgebrochen und es erscheint beispielsweise eine Fehlermeldung. Dies ist beispielsweise dann der Fall, wenn ein Magnetstreifen-basiertes Authentifizierungsverfahren ausgewählt wurde, anhand der Sicherheitsinformation und der Prüfrichtlinie ersichtlich ist, dass sowohl das Lesegerät als auch der elektronische Schlüssel ein Smartcard-basiertes Verfahren bereitstellen würden.

Ist das Überprüfungsergebnis im Schritt 307 jedoch konform mit der Prüfrichtlinie, wird das Authentifizierungsverfahren mit dem ausgewählten Authentifizierungsverfahren fortgesetzt. Das Verfahren endet in Schritt 310.

## Patentansprüche

1. Elektronischer Schlüssel zur Authentifizierung eines Benutzers,
wobei die Authentifizierung über mindestens zwei Authentifizierungsverfahren jeweils durchführbar ist und bei dem für jeweils ein Authentifizierungsverfahren eine separate Sicherheitsinformation gespeichert ist, welche jeweils über mindestens eine Schnittstelle lesbar ist, wobei die zumindest zwei Schnittstellen unterschiedlich ausgebildet sind,
**dadurch gekennzeichnet,**
**dass** die Sicherheitsinformation über ein erstes Authentifizierungsverfahren eine Information über die Unterstützung zumindest eines weiteren Authentifizierungsverfahrens aufweist.

2. Elektronischer Schlüssel nach Anspruch 1,
wobei die mindestens eine Schnittstelle als kontaktbehaftete Chipkarte, kontaktlose Chipkarte oder Magnetstreifen ausgebildet ist.

3. Elektronischer Schlüssel nach Anspruch 1 oder 2,
wobei eine Integrität der Information über die Unterstützung des zumindest einen weiteren Authentifizierungsverfahrens durch eine kryptographische Prüfsumme geschützt ist.

4. Elektronischer Schlüssel nach einem der Ansprüche 1 bis 3, wobei die Information über die Unterstützung eines weiteren Authentifizierungsverfahrens von einem Server abrufbar ist.

5. Verfahren zur Authentifizierung eines Benutzers mit einem Lesegerät und einem elektronischen Schlüssel nach einem der Ansprüche 1 bis 4, wobei folgende Schritte durch das Lesegerät ausgeführt werden:
- Ermitteln von durch den elektronischen Schlüssel unterstützten ersten Authentifizierungsverfahren, anhand einer ersten Schnittstelle des Lesegerätes
- Auswählen eines Authentifizierungsverfahrens gemäß einer vorgebbaren Richtlinie aus den unterstützten ersten Authentifizierungsverfahren, anhand einer zweiten Schnittstelle des Lesegerätes, wobei sich die erste und die zweite Schnittstelle unterscheiden
- Lesen einer Sicherheitsinformation für das ausgewählte Authentifizierungsverfahren,
- Ermitteln von unterstützten zweiten Authentifizierungsverfahren anhand der Sicherheitsinformation,
- Überprüfen des ausgewählten Authentifizierungsverfahrens anhand der unterstützten zweiten Authentifizierungsverfahren gemäß einer vorgebbaren Prüfrichtlinie, so dass
- bei einem Prüfrichtlinien-konformen Überprüfungsergebnis die Authentifizierung mit dem ausgewählten Authentifizierungsverfahren fortgesetzt wird,
- bei einem nicht Prüfrichtlinien-konformen Überprüfungsergebnis die Authentifizierung mit dem ausgewählten Authentifizierungsverfahren unterbunden wird.

6. Verfahren nach Anspruch 5,
wobei die Authentifizierung mit dem elektronischen Schlüssel unterbunden wird.

7. System zur Authentifizierung eines Benutzers aufweisend
- einen elektronischen Schlüssel mit Mitteln zur Durchführung von mindestens zwei Authentifizierungsverfahren, bei dem für jeweils ein Authentifizierungsverfahren eine separate Sicherheitsinformation gespeichert ist, welche jeweils über mindestens eine Schnittstelle lesbar ist, wobei die zumindest zwei Schnittstellen unterschiedlich ausgebildet sind und bei dem die Sicherheitsinformation über ein erstes Authentifizierungsverfahren eine Information über die Unterstützung zumindest eines weiteren Authentifizierungsverfahrens aufweist,
- ein Lesegerät mit Mitteln zum Ermitteln von weiteren unterstützten Authentifizierungsverfahren anhand der ausgelesenen Sicherheitsinformation und zum Überprüfen eines ausgewählten Authentifizierungsverfahrens anhand der weiteren unterstützten Authentifizierungsverfahren gemäß einer vorgebbaren Prüfrichtlinie, so dass
- bei einem Prüfrichtlinien-konformen Überprüfungsergebnis die Authentifizierung mit dem ausgewählten Authentifizierungsverfahren fortgesetzt wird,
- bei einem nicht Prüfrichtlinien-konformen Überprüfungsergebnis die Authentifizierung mit dem ausgewählten Authentifizierungsverfahren abgebrochen wird.

## Claims

1. Electronic key for authentication of a user,
wherein the authentication can be performed by means of at least two authentication methods in each case, and wherein separate security information is stored for an authentication method in each case, said security information being readable via at least one interface in each case, wherein the at least two interfaces are designed differently,
**characterized in that**
the security information relating to a first authentication method includes information relating to the support for at least one further authentication method.

2. Electronic key according to claim 1,
wherein the at least one interface is designed as a contacted chipcard, contactless chipcard or magnetic strip.

3. Electronic key according to claim 1 or 2,
wherein the integrity of the information relating to the support for the at least one further authentication method is protected by a cryptographic checksum.

4. Electronic key according to one of the claims 1 to 3,
wherein the information relating to the support for a further authentication method can be retrieved from a server.

5. Method for authentication of a user by means of a reading device and an electronic key according to one of the claims 1 to 4, wherein the following steps are carried out by the reading device:
- ascertaining first authentication methods supported by the electronic key, on the basis of a first interface of the reading device,
- selecting an authentication method from the supported first authentication methods according to a predefinable rule, on the basis of a second interface of the reading device, wherein the first and the second interfaces differ,
- reading security information relating to the selected authentication method,
- ascertaining supported second authentication methods on the basis of the security information,
- verifying the selected authentication method on the basis of the supported second authentication methods according to a predefinable checking rule, such that
- the authentication using the selected authentication method is continued if a verification result conforms to the checking rule,
- the authentication using the selected authentication method is prevented if a verification result does not conform to the checking rule.

6. Method according to claim 5,
wherein the authentication using the electronic key is prevented.

7. System for authentication of a user, comprising
- an electronic key having means for performing at least two authentication methods, wherein separate security information is stored for an authentication method in each case, said security information being readable via at least one interface, wherein the at least two interfaces are designed differently, and wherein the security information relating to a first authentication method includes information relating to the support for at least one further authentication method,
- a reading device having means for ascertaining further supported authentication methods on the basis of the security information that is read, and for verifying a selected authentication method on the basis of the further supported authentication methods according to a predefinable checking rule, such that
- the authentication using the selected authentication method is continued if a verification result conforms to the checking rule,
- the authentication using the selected authentication method is aborted if a verification result does not conform to the checking rule.

## Revendications

1. Clé électronique servant à l'authentification d'un utilisateur,
l'authentification étant réalisable à travers au moins deux procédés d'authentification à chaque fois, et pour chacun des procédés d'authentification une information de sécurité séparée étant stockée, qui peut être lue par l'intermédiaire d'au moins une interface, les au moins deux interfaces étant conçues de manière différente,
**caractérisée en ce que**
l'information de sécurité sur un premier procédé d'authentification comporte une information sur la prise en charge d'au moins un autre procédé d'authentification.

2. Clé électronique selon la revendication 1,
ladite au moins une interface étant conçue comme carte à puce avec contact, carte à puce sans contact ou bande magnétique.

3. Clé électronique selon la revendication 1 ou 2,
une intégrité de l'information sur la prise en charge dudit au moins un autre procédé d'authentification étant protégée par une somme de contrôle cryptographique.

4. Clé électronique selon l'une des revendications 1 à 3,
l'information sur la prise en charge d'un autre procédé d'authentification étant récupérable sur un serveur.

5. Procédé d'authentification d'un utilisateur au moyen d'un lecteur et d'une clé électronique selon l'une des revendications 1 à 4, le lecteur effectuant les étapes suivantes :
- détecter des premiers procédés d'authentification pris en charge par la clé électronique, à l'aide d'une première interface du lecteur,
- sélectionner un procédé d'authentification selon une directive prédéterminable parmi les premiers procédés d'authentification pris en charge, à l'aide d'une deuxième interface du lecteur, les première et deuxième interfaces étant distinctes l'une de l'autre,
- lire une information de sécurité pour le procédé d'authentification sélectionné,
- détecter des deuxièmes procédés d'authentification pris en charge, à l'aide de l'information de sécurité,
- vérifier le procédé d'authentification sélectionné à l'aide des deuxièmes procédés d'authentification pris en charge selon une directive de contrôle prédéterminable, de sorte que
- lorsque le résultat de la vérification est conforme à la directive de contrôle, l'authentification au moyen du procédé d'authentification sélectionné est poursuivie,
- lorsque le résultat de la vérification n'est pas conforme à la directive de contrôle, l'authentification au moyen du procédé d'authentification sélectionné est empêchée.

6. Procédé selon la revendication 5,
l'authentification au moyen de la clé électronique étant empêchée.

7. Système d'authentification d'un utilisateur, comportant
- une clé électronique comprenant des moyens de mise en oeuvre d'au moins deux procédés d'authentification, pour chacun des procédés d'authentification une information de sécurité séparée étant stockée, qui peut être lue par l'intermédiaire d'au moins une interface, les au moins deux interfaces étant conçues de manière différente, et l'information de sécurité sur un premier procédé d'authentification comportant une information sur la prise en charge d'au moins un autre procédé d'authentification,
- un lecteur comprenant des moyens de détection d'autres procédés d'authentification pris en charge à l'aide de l'information de sécurité lue, et de vérification d'un procédé d'authentification sélectionné à l'aide des autres procédés d'authentification pris en charge selon une directive de contrôle prédéterminable, de sorte que
- lorsque le résultat de la vérification est conforme à la directive de contrôle, l'authentification au moyen du procédé d'authentification sélectionné est poursuivie,
- lorsque le résultat de la vérification n'est pas conforme à la directive de contrôle, l'authentification au moyen du procédé d'authentification sélectionné est abandonnée.
